(19) Europäisches Patentamt / European Patent Office / Office européen des brevets

(11) **EP 2 026 979 B1**

(12) **EUROPEAN PATENT SPECIFICATION**

(45) Date of publication and mention
of the grant of the patent:
**28.10.2015 Bulletin 2015/44**

(21) Application number: **07765917.5**

(22) Date of filing: **12.06.2007**

(51) Int Cl.:
**B44B 5/02** *(2006.01)*

(86) International application number:
**PCT/FI2007/050351**

(87) International publication number:
**WO 2007/144470 (21.12.2007 Gazette 2007/51)**

(54) **EMBOSSING MEMBER FOR PRODUCING DIFFRACTIVE MICROSTRUCTURES**

PRÄGEELEMENT ZUR ERZEUGUNG DIFFRAKTIVER MIKROSTRUKTUREN

ÉLÉMENT DE GAUFRAGE POUR PRODUIRE DES MICROSTRUCTURES DIFFRINGENTES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **14.06.2006 FI 20065408**

(43) Date of publication of application:
**25.02.2009 Bulletin 2009/09**

(73) Proprietor: **Avantone Oy**
**00130 Helsinki (FI)**

(72) Inventor: **KOIVUKUNNAS, Pekka**
**04430 Järvenpää (FI)**

(74) Representative: **TBK**
**Bavariaring 4-6**
**80336 München (DE)**

(56) References cited:
WO-A1-93/24332    WO-A1-2006/037851
GB-A- 1 086 220    GB-A- 1 598 183
US-A- 4 050 863    US-A- 5 540 153
US-A1- 2005 241 503

**Description**

The present invention relates to an embossing device according to the appended independent claim 1. The present invention relates also to a method according to the preamble of the appended independent claim 9 for producing diffractive microstructures.

BACKGROUND OF THE INVENTION

Diffractive microstructures may be attached to products e.g. for a visual effect produced by them, or for authenticating the product.
Diffractive microstructures may be produced e.g. by embossing the surface of a substrate coated with a suitable lacquer. When producing the microstructure, the substrate is pressed between an embossing member and a backing member. The surface of the embossing member comprises a relief corresponding to the microstructure. During the embossing process, the backing member supports the substrate from the back side so that a sufficient pressure may be exerted on the surface of the substrate for shaping the surface layer of the substrate to correspond to the relief of the embossing member.
US patent 4,913,858 discloses a method for producing a diffractive microstructure on the surface of a paper coated with a thermoplastic material. The microstructure is produced on the coating by an embossing member, which is installed on a roll. US patent 6,651,338 discloses a method for manufacturing a cylindrical embossing member, in which method the embossing member is made by laser welding of a sheet having a microstructure.
WO-A-2006/037851 discloses an embossing device according to the preamble of claim 4.

BRIEF DESCRIPTION OF THE INVENTION

It is an object of the present invention to provide an embossing device for producing diffractive microstructures on the surface of a substrate. It is another object of the present invention to provide a method for producing diffractive microstructures on the surface layer of a substrate.
To attain these objects, the embossing device according to the invention is primarily characterized in what is presented in the characterizing part of the appended independent claim 1. To attain these objects, the embossing method according to the invention is primarily characterized in what is presented in the characterizing part of the appended independent claim 9. The dependent claims present some advantageous embodiments of the invention.
To attain these objects, the device and the method according to the invention are primarily characterized in that the embossing member for producing the diffractive microstructure comprises:

- one or more fastening portions, wherein the embossing member is fastened to an embossing device by clamping said fastening portions between mounting faces, wherein at least one stamping surface is located between the first and second fastening portions, or between the first part and the second part of a uniform fastening portion, and
- at least one permanently doubly curved section which directly or indirectly connects said at least one stamping surface to at least one of said fastening portions.

The embossing member according to the invention may be fastened quickly and firmly to its base without using adhesive, solder, or welding. The embossing member may also be replaced quickly when the member is damaged, jammed, or for changing the shape of the microstructure to be produced.
The invention and its fundamental properties as well as advantages to be attained by means of the invention will become more evident for a person skilled in the art from the claims and the following description, in which the invention will be described in more detail by means of a few selected examples.

BRIEF DESCRIPTION OF THE DRAWINGS

The invention and its fundamental properties as well as advantages to be attained by means of the invention will become more evident for the person skilled in the art from the following description in which the invention will be described in more detail by means of a few selected examples, referring to the appended drawings, in which

Fig. 1      shows schematically a cross-sectional view of an embossing device,

Fig. 2a     is a schematic cross-sectional view of a product having a microstructure,

Fig. 2b     shows schematically and three-dimensionally a product having a microstructure,

Fig. 3        shows schematically a cross-sectional view of an embossing member,

Fig. 4        is a schematic and three-dimensional view of an embossing module,

Fig. 5        is a schematic and three-dimensional view of an embossing member,

Fig. 6        is a schematic and three-dimensional view of a doubly curved portion,

Fig. 7        is a schematic and three-dimensional view of an embossing member having a uniform fastening portion surrounding a stamping surface,

Fig. 8a       is a schematic and three-dimensional view of an embossing member having a uniform doubly curved portion and a uniform fastening portion surrounding the stamping surface,

Fig. 8b       shows schematically a cross-sectional view of an embossing member,

Fig. 8c       is a schematic and three-dimensional view of a product which has a microstructure,

Fig. 8d       is a schematic and three-dimensional view of an embossing module,

Fig. 8e       is a schematic and three-dimensional view of a fastening piece for an embossing member,

Fig. 9a       is a schematic and three-dimensional view of an embossing member whose fastening portion is inclined with respect to the stamping surface,

Fig. 9b       shows schematically the cross-section of such an embossing member which has the embossing member shown in Fig. 9a,

Fig. 10a      shows schematically the cross-section of a fastening module in which the fastening portion of the embossing member is substantially perpendicular to the stamping surface, and the force lines of screws are substantially perpendicular to the lower surface of the mounting base,

Fig. 10b      shows schematically the cross-section of a fastening module in which the fastening portion of the embossing member is substantially perpendicular to the stamping surface, and the force lines of the screws are inclined with respect to the mounting base,

Fig. 10c      shows schematically the cross-section of a fastening module in which the fastening portion of the embossing member is substantially perpendicular to the stamping surface, and the force lines of the screws are substantially perpendicular to the fastening portion,

Fig. 11       is a schematic and three-dimensional view of an embossing module which has a bulge,

Fig. 12a      illustrates schematically the initial stage of shaping of an embossing member,

Fig. 12b      illustrates schematically the final stage of shaping according to Fig. 12a,

Fig. 13a      illustrates schematically the initial stage of shaping of an embossing member,

Fig. 13b      illustrates schematically the final stage of shaping according to Fig. 13a,

Fig. 14       illustrates schematically the shaping of an embossing member,

Fig. 15a      illustrates schematically the initial stage of shaping of an embossing member,

Fig. 15b      illustrates schematically the final stage of shaping according to Fig. 15a,

Fig. 16       is a schematic and three-dimensional view of an embossing member having an external and an internal fastening portion,

Fig. 17      illustrates schematically and three-dimensionally the fastening of an embossing member directly with screws,

Fig. 18      shows schematically the cross-sectional view of an embossing device which is adapted to produce a macroscopic recess in a substrate in addition to producing a diffractive microstructure,

Fig. 19      shows schematically the cross-sectional view of an embossing device which is adapted to produce a macroscopic protrusion in a substrate in addition to producing the diffractive microstructure,

Fig. 20      shows schematically the cross-sectional view of an embossing device whose backing member is has a resilient surface,

Fig. 21      shows schematically the cross-sectional view of an embossing device that comprises resilient means for separating the substrate from the embossing member,

Fig. 22a      shows schematically the cross-sectional view of an embossing device which comprises several embossing members, and

Fig. 22b      shows three-dimensionally microstructures produced in the surface layer of the substrate by the device of Fig. 22a.

## DETAILED DESCRIPTION OF THE INVENTION

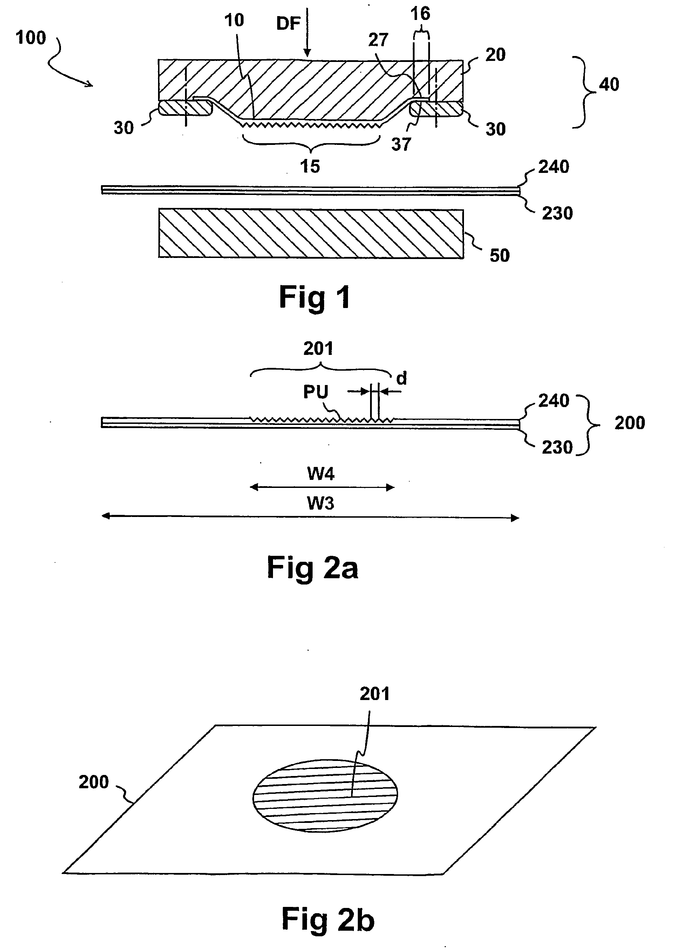

With reference to Fig. 1, an embossing device 100 comprises an embossing member 10 and a backing member 50. The stamping surface 15 of the embossing member has a relief corresponding to the diffractive microstructure to be produced. The embossing member 10 and the backing member 50 exert an embossing pressure on the surface layer 240 of the substrate 230, wherein compression and/or material flow takes place in microscopic scale in the surface layer so that a diffractive microstructure 201 corresponding to the relief of the stamping surface 15 is formed in the surface layer 240 of the substrate.

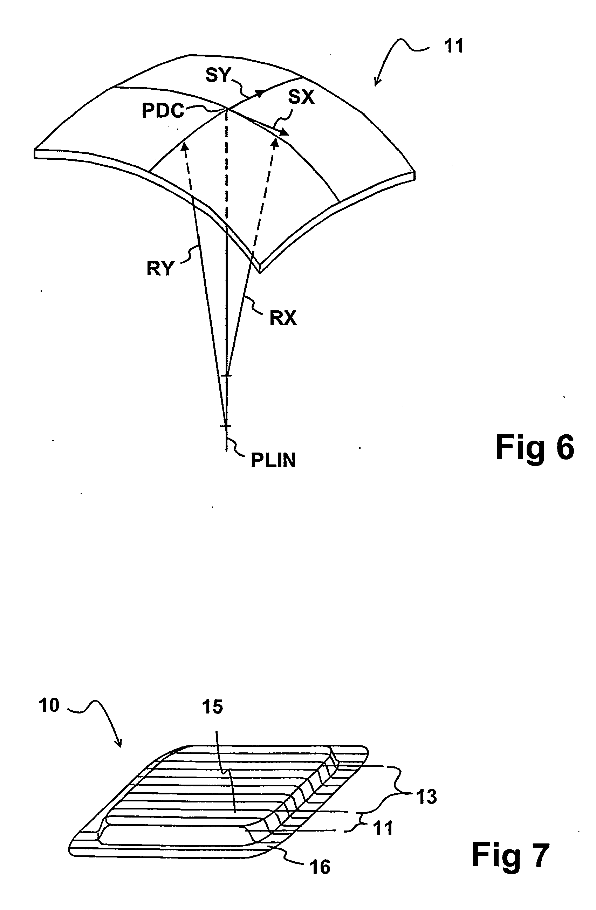

The embossing member 10 is attached to the embossing device 100 by clamping a fastening portion 16 of the embossing member 10 between mounting faces 27, 37. The stamping surface 15 and the fastening portion 16 are connected directly or indirectly by at least one doubly curved portion 11. The doubly curved portion 11 will be defined later in the context of Fig. 6.

In the embodiment of Fig. 1, the fastening portion 16 is clamped between a mounting face 27 which is in a mounting base 20 and a mounting face 37 which is in a mounting piece 30. The combination of the mounting base 20 and the embossing member 10 fastened to it constitutes an embossing module 40.

DF refers to the direction of a force exerted on the embossing member during embossing.

With reference to Fig. 2a, a diffractive microstructure 201 corresponding to the relief of the stamping surface 15 of the embossing member 10 is produced on the surface layer 240 of the substrate 230. The diffractive microstructure 201 comprises several microscopic protrusions PU which are located next to each other at a spacing of a grating constant d. W4 refers to the width of the microstructure area 201, and W3 refers to the width of the substrate 230. The product 200 may comprise a substrate 230, a surface layer 240, as well as one or more microstructure areas 201 produced on the surface layer.

Figure 2b is a three-dimensional view of the product 200 and the microstructure area 201 therein.

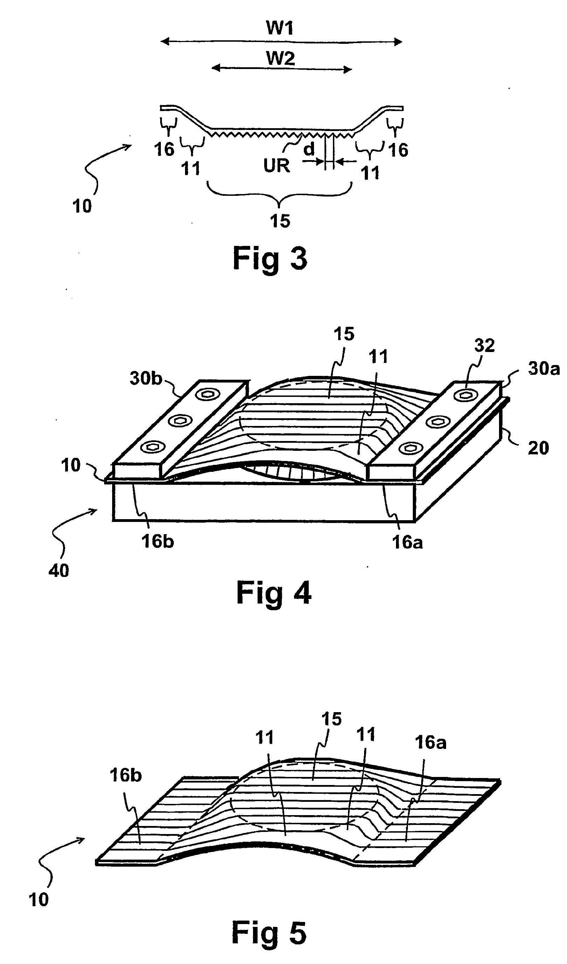

With reference to Fig. 3, the embossing member 10 comprises at least one stamping surface 15, at least one fastening portion 16, and at least one doubly curved portion 11. The doubly curved portion 11 connects the first stamping surface 15 directly or indirectly to the fastening portion 16. At least one doubly curved portion 11 is located between the stamping surface 15 and the fastening portion 16. The stamping surface 15 has also a diffractive microstructure which has several microscopic recessions UR located next to each other at a spacing of the grating constant d.

W1 refers to the width of the embossing member 10, and W2 refers to the width of the stamping surface 15. The stamping surface 15 advantageously protrudes with respect to the fastening portion 16 or with respect to the fastening portion 16, wherein the width W3 of the substrate 230 (Fig. 2a) may be greater than the width W1 of the embossing member 10.

Figure 4 is a three-dimensional view of an embossing module 40 having the stamping surface 15 between the first fastening portion 16a and the second fastening portion 16b. In this embodiment, the doubly curved portion 11 surrounds the stamping surface 15. In this embodiment, the stamping surface 15 protrudes with respect to the fastening portions 16a and 16b, and the stamping surface 15 also protrudes with respect to the upper surface of the fastening pieces 30a, 30b. Consequently, at least one stamping surface 15 may protrude with respect to the fastening portions 16a, 16b.

The fastening portions 16a and 16b are clamped against the mounting base 20 with mounting pieces 30a, 30b. The fastening force may be provided, for example, by screws 32.

Figure 5 is a three-dimensional view of the embossing member 10 according to Fig. 4. The embossing member shown in Figs. 1 and 3 is upside down when compared with the embossing member 10 shown in Fig. 5.

We shall now define the concept "doubly curved" with reference to Fig. 6. Figure 6 shows a part of a doubly curved portion 11. A point PDC is an arbitrary point in the doubly curved portion 11. The directions SX and SY are orthogonal. The directions SX and SY are in a plane tangential to the surface in the point PDC. The surface is defined to be doubly curved at the point if the value of the radius of curvature of the surface is finite in all the directions in the plane tangential to the surface at the point PDC in the infinitesimal environment of the point PDC. For example, spherical and ellipsoid surfaces are doubly curved. For comparison, it is noted that cylindrical and planar surfaces are not doubly curved, because their radius of curvature is infinite in at least one direction. The radius of curvature of the surface is equal to RX when travelling an infinitesimal distance from the point PDC in the direction SX. The radius of curvature of the surface is equal to RY when travelling an infinitesimal distance from the point PDC in the direction SY. The origins of the radii RX, RY of curvature of the surface are on a straight line PLIN which extends through the point PDC and which is perpendicular to said surface. The radius of curvature RX in the first direction SX is greater than or equal to 0.1 mm and smaller than or equal to 2 mm, and the radius of curvature RY in the second orthogonal direction SY is greater than or equal to 0.1 mm and smaller than or equal to 50 mm, wherein the directions SX and SY are selected so that said radius of curvature RY reaches its maximum value in said second direction SY.

With reference to Fig. 7, the fastening portion 16 may be a substantially planar flange that is substantially parallel to the stamping surface 15. In Fig. 7, a uniform fastening portion 16 forms a substantially uniform edge for the embossing member 10, wherein the fastening portion 16 substantially surrounds the stamping surface 15. The fastening portion 16 is mounted by clamping it between the mounting faces in the mounting base 20 and the mounting piece 30. The stamping surface 15 protrudes with respect to the fastening portion 16.

With reference to Fig. 7, the embossing member 10 may comprise several doubly curved portions 11. For example, each of the four corners of a square stamping surface 15 may comprise a doubly curved portion 11. The stamping surface 15 and the fastening portion 16 may be connected by not only the doubly curved portions 11 but also portions 13 that are curved in one direction. Consequently, between the straight sides of the stamping surface 15 and the fastening portion, there may also be portions 13 that are curved in one direction, for example portions 13 that are curved in a cylindrical manner.

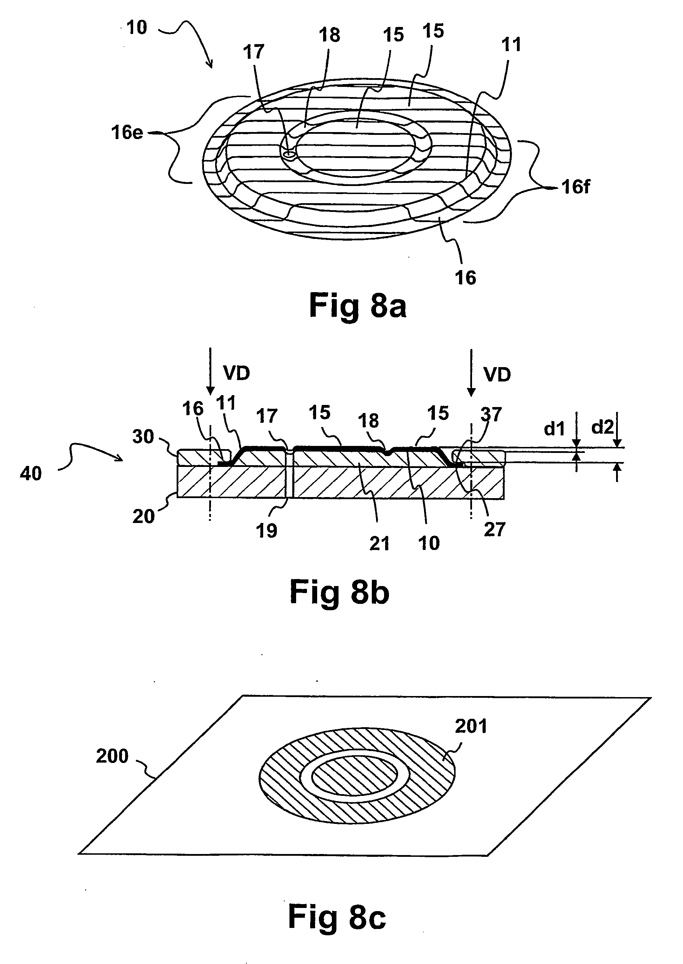

With reference to Fig.8a, the doubly curved portion 11 and the fastening portion 16 may substantially surround the stamping surface 15. The stamping surface 15 is between the first part 16e and the second part 16f of a uniform fastening portion 16. In this embodiment, the stamping surfaces 15 and the fastening portion 16 are substantially planar.

The embossing member 10 may also comprise a steam discharge groove 18 for discharging steam from between the surface layer 240 of the substrate and the embossing member 10 during the embossing. In particular, when a paper or cardboard-based substrate 200 is heated, water vapour is released, which may prevent the embossing member 10 from being pressed against the surface of the substrate 200. In the embodiment of Fig. 8a, the steam flowing in the steam groove is also discharged via a steam discharge hole 17. However, the steam discharge hole 17 is not necessarily needed in such embodiments in which the steam discharge groove 18 extends to the outer edge of the stamping surface 15. The width of the steam discharge groove 18 may be, for example, greater than or equal to 2 mm, and its depth may be, for example, greater than or equal to 0.2 mm. The steam discharge groove 18 may also comprise doubly curved surfaces.

With reference to Fig. 8b, the stamping surface 15 advantageously protrudes with respect to the fastening portion 16. d2 refers to the height of the stamping surface 15 with respect to the fastening portion 16. Thus, the amount of protrusion of the stamping surface 15 with respect to the upper surface of the mounting piece 30 is d1. This makes it possible that the width W3 of the substrate 200 (Fig. 2a) may be greater than the width W1 of the embossing member (Fig. 3) and that the width W3 of the substrate 200 may be greater than the width W2 of the stamping surface. The height difference d2 may be, for example, greater than or equal to 2 mm, and the distance d1 may be, for example, greater than or equal to 0.2 mm.

The clamping force required for the mounting may be provided, for example, by screws. During the tightening, the mounting piece 30 is moved in the direction VD with respect to the mounting base 20. The mounting base comprises a bulge 21 corresponding to the shape of the embossing member 10. The bulge 21 may be formed directly during the working of the base 20, or it may be a separate part that is mounted to the base 20, for example, by gluing, by soldering, by a screw joint, or by riveting.

Figure 8b shows also a steam discharge channel 19 corresponding to the steam discharge hole 17 in the embossing module 40 and the bulge 21 therein.

With reference to Fig. 8c, a microstructure giving only a weak effect, or no microstructure at all is formed at that part of the product 200 which corresponds to the steam groove 18 of the embossing member 10.

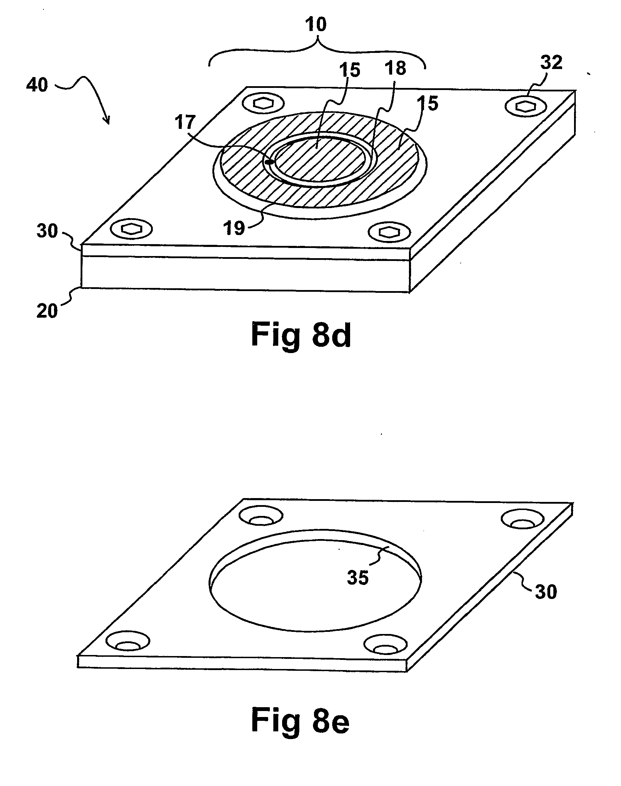

Figure 8d is a three-dimensional view of the embossing module 40. The embossing module 40 may comprise the embossing member 10 shown in Fig. 8a and the mounting piece shown in Fig. 8e. The mounting piece 30 may be fixed to the mounting base 20, for example, by means of screws 32. With reference to Fig. 8e, the mounting piece 30 may be, for example, a frame machined from a sheet, in which an opening 35 is machined to correspond to the embossing member 10.

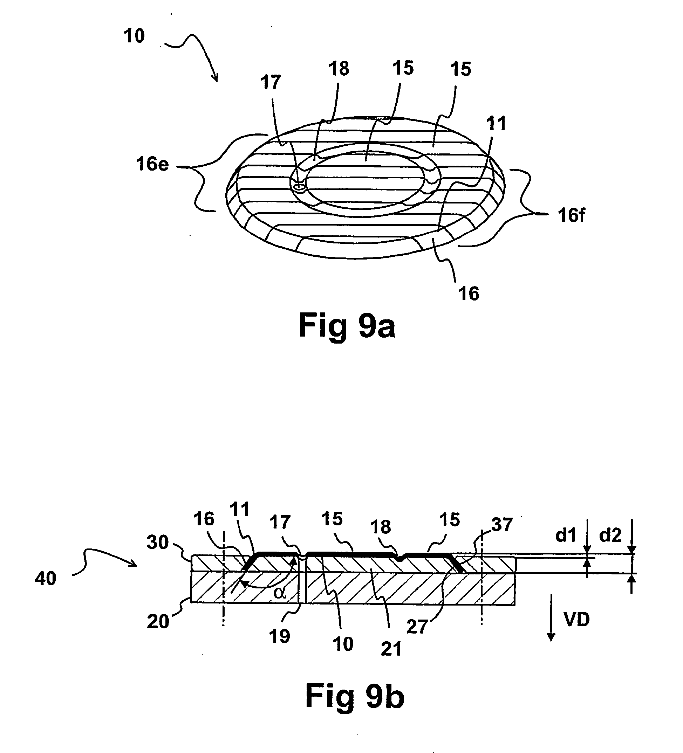

With reference to Figs. 9a and 9b, the fastening portion 16 may also be inclined with respect to the stamping surface 15 and/or to the mounting base 20. The angle α between the fastening portion 16 and the stamping surface 15 may thus be smaller than 180 degrees. The fastening portion 16 of the embossing member 10 according to Fig. 9a may be, for example, a conical surface. The fastening portion 16 is clamped between the mounting faces 27, 37 in the bulge 21 and in the mounting piece 30. In Fig.9a, the stamping surface 15 is located between the first part 16e and the second part 16f of the uniform fastening portion 16.

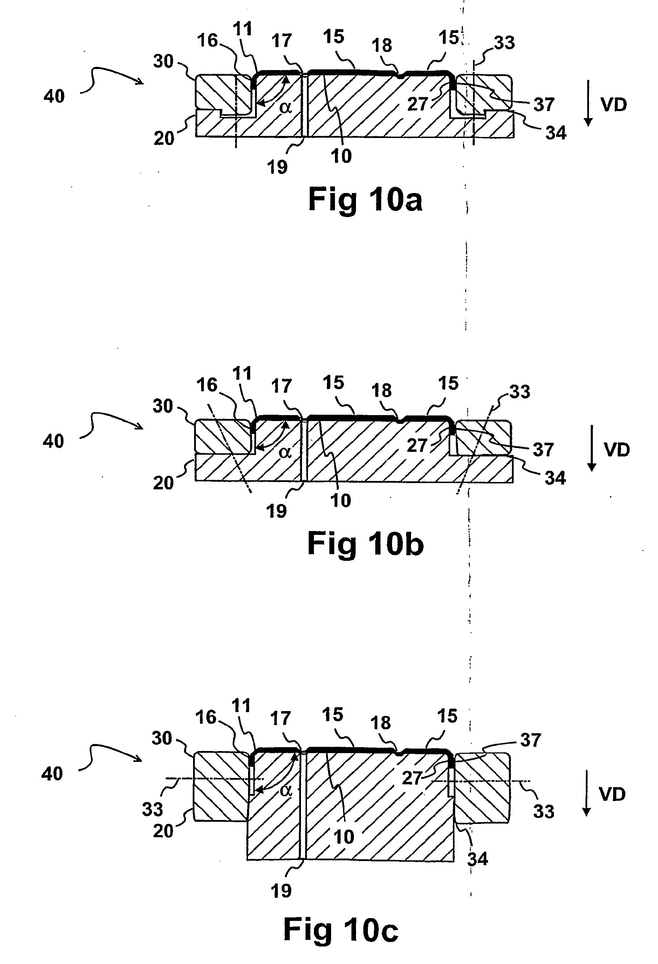

With reference to Figs. 10a to 10c, the fastening portion 16 may also be substantially perpendicular to the stamping surface 15. The angle α between the fastening portion 16 and the stamping surface 15 may thus be substantially equal to 90 degrees. The fastening portion 16 is clamped between mounting faces 27, 37 in the base 20 and in the mounting piece 30.

With reference to Fig. 10a, the contact surface 34 between the mounting piece 30 and the mounting base 20 may be outside the force lines 33 of screws, wherein the mounting piece 30 rotates slightly and squeezes laterally and/or radially around the fastening portion 16.

The force lines 33 of the screws may also be inclined with respect to the fastening portion 16, as shown in Fig. 10b, or perpendicular to the fastening portion 16, as shown in Fig. 10c, wherein the screws provide a lateral and/or a radial clamping force when tightened.

The embossing member 10 is advantageously worked from a sheet having a diffractive relief. The shaping of the doubly curved portion 11 typically requires local stretching of the sheet using male and female moulds.

When the moulds are used, one problem may be that the microstructure of the stamping surfaces 16 pressed against the moulds may be damaged. The manufacture of separate moulds is also an expensive and time-consuming step. The manufacture of the embossing members 10 by means of separate moulds is a time-consuming step. Furthermore, the keeping of separate moulds in storage is troublesome.

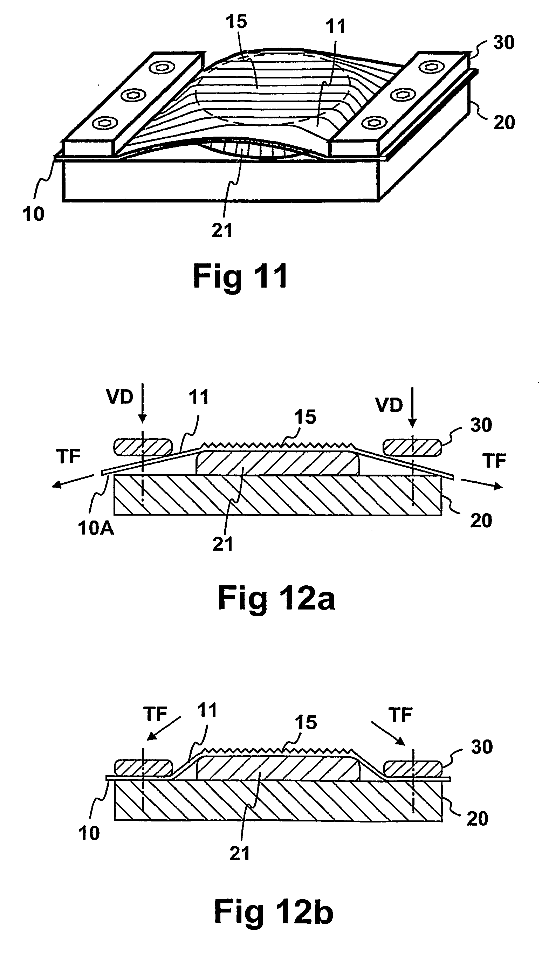

In one embodiment of the invention, the macroscopic form and the doubly curved portions 11 of the embossing member 10 are shaped by using components of the embossing module 40, in particular by using the bulge 21 in the embossing module (Fig. 11). In this case, there is no need to manufacture or store separate moulds, the microstructure of the stamping surface 15 is damaged as little as possible during the shaping, the embossing member 10 does not need to be removed from the moulds after the shaping and does not need to be transferred to the embossing module 40, and the embossing members 10 worked in advance do not need to be stored. The tensioning force that keeps the stamping surface 15 of the embossing member 10 in its place may be greater than when using an embossing member 10 worked in separate moulds.

In one embodiment, at least one permanently doubly curved portion 11 of the embossing member 10 may thus be worked by using at least one such fastening means that is also used for fixing said embossing member 10 to the embossing device 100. The fastening means may be, for example, the bulge 21, the mounting base 20 and/or the mounting piece 30. The doubly curved portion 11 or portions are advantageously worked when said embossing member 10 is mounted to the embossing device 100 and/or to the embossing module 40.

The shaping is advantageously performed so that the surfaces that shape the embossing member are off the stamping surface 15 during the working, to avoid damage to the microstructure of the stamping surface 15.

With reference to Fig. 11, the macroscopic shape of the embossing member 10 may be determined by means of the shape of the bulge 21 in the embossing module 40 and the mounting pieces 30.

With reference to Fig. 12a, at the initial stage of the shaping, the mounting piece 30 or pieces are moved in direction VD. Simultaneously, the edges of the blank 10A of the embossing member are held and/or stretched in directions TF. Figure 12b shows the final stage of the shaping, in which a doubly curved portion or portions 11 have been formed in the embossing member. The fastening portions are clamped between the mounting base 20 and the mounting pieces 30. Tensions in the directions TF remain in the doubly curved portions to keep the stamping surface 15 of the embossing member 10 stably in position.

The shaping is performed so that no creases are formed in the embossing member 10 to disturb its function. Typically, no creases at all must be formed in the stamping surfaces 15. When avoiding the formation of creases, it is possible, for example, to optimize the shape of the bulge 21 and/or the shape of the mounting piece 30. The mounting piece 30 may be divided into several parts, wherein the mutual order of tightening of said parts and/or screws 32 may be used to avoid the formation of creases. To avoid the formation of creases, it is also possible to select the thickness of the sheet having the microstructure. If necessary, the thickness of the sheet may be increased, for example, by connecting a supporting sheet to it. For connecting, for example glue or solder may be used.

In some embodiments, creases in the stamping surface 15 may, however, provide an interesting visual effect in the product 200.

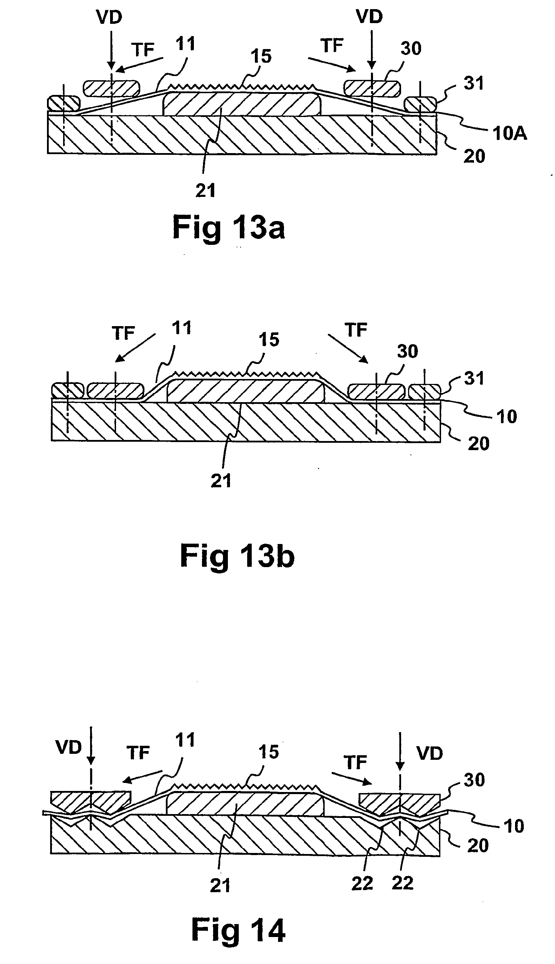

With reference to Fig. 13a, the edges of the blank 10A of the embossing member may also be locked in position at the initial step of the shaping by means of an auxiliary frame 31. The sheet material is stretched in the directions TF when the mounting pieces 30 are moved in the direction VD. Figure 13b shows the final stage of the shaping, in which a doubly curved portion or portions 11 have been formed in the embossing member. The fastening portions are clamped between the mounting base 20 and the mounting pieces 30. Tensions in the directions TF remain in the doubly curved portions to keep the stamping surface of the embossing member 10 stably in position. The auxiliary frame 31 may then be removed, if desired.

With reference to Fig. 14, the tensioning forces for shaping the embossing member 10 and for keeping it stationary may also be produced by providing the mounting piece 30 and the mounting base 20 with grooves or recesses 22 as well as corresponding ridges or protrusions so that the fastening portions of the embossing member 10 remain between the recess 22 and the corresponding bulge. In this way, the fastening portion is locked between the recess and the bulge by friction and/or by a deformation of the sheet, or it slides between the recess and the bulge only when a great lateral force is applied. The mounting piece 30 sliding in the direction VD will thus produce a force that stretches the sheet material in the directions TF.

In one embodiment, the blank of the embossing member is glued to the mounting piece 30 before the shaping is started, in which case the recesses and bulges shown in Fig. 14 may be omitted.

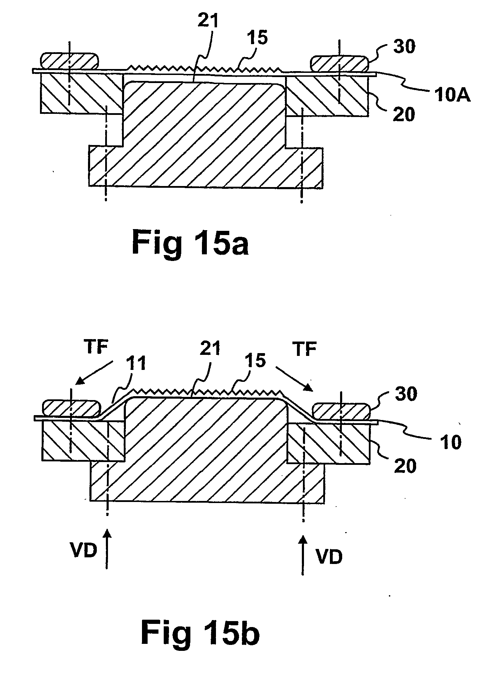

With reference to Fig. 15a, the blank 10A of the embossing member may be locked in position by clamping it between the mounting base 20 and the mounting piece 30. The bulge 21 is arranged to be moved in a direction VD that is substantially perpendicular to the mounting base 20. With reference to Fig. 15b, the macroscopic shape and the doubly curved portions 11 of the embossing member 10 are formed when the bulge 21 is moved in the direction VD. Tensions in the directions TF remain in the doubly curved portions to keep the stamping surface of the embossing member 10 stably in its place.

Referring back to Figs. 8b, 9b, 10a, 10b, and 10c, also in these embodiments, the embossing member 10 may be shaped to at least some extent by means of the components 21, 20, 30 of the embossing module 40.

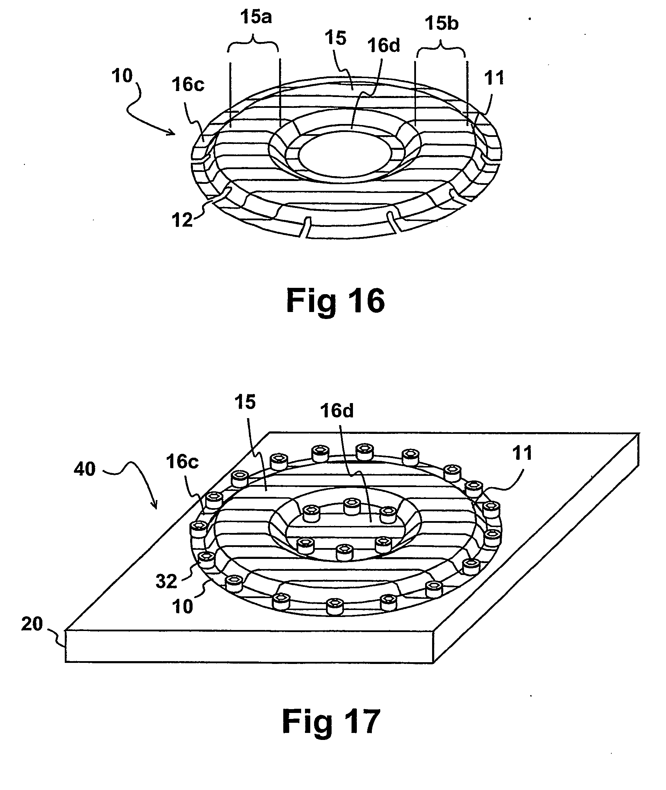

Referring to Fig. 16, the embossing member may also comprise an internal fastening portion 16d in addition to or instead of one or more external fastening portions 16c. The fastening portion 16d may be located between the first portion 15a and the second portion 15b of the uniform stamping surface 15.

In Fig. 16, the external fastening portions 16c substantially surround the stamping surface 15. The embossing member 10 may be easier to shape if its fastening portions 16 and/or doubly curved portions 11 have indentations or cuts 12.

The embossing member 10 may be easier to manufacture if it comprises, instead of a planar fastening portion 16 (Figs. 8a and 8b), a fastening portion that is inclined (Figs. 9a and 9b) or perpendicular to the stamping surface (Figs. 10a to 10c).

On the other hand, however, the machining work needed for manufacturing the mounting base 20 and the mounting piece 30 may be easier in the embodiment of Fig. 8a when compared with the embodiments of Figs. 9a and 10a.

With reference to Fig. 17, for fastening the embossing member 10 to the base 20, for example the mounting piece 30 of Fig. 8e is not necessarily needed, but the embossing member 10 may be fastened directly with screws 32. Thus, the fastening portion 16 of the embossing member is clamped between the screw heads and the mounting base 20. In the embossing module 40, the heads of the screws 32 are advantageously further down than the stamping surface 15. The direct fastening with screws may also be used to complement the fastening by means of the mounting piece 30. In addition, it is possible to use, for example, washers under the screw heads. The screws may also be countersunk, wherein the corresponding mounting part or parts 16 may have a conical recess.

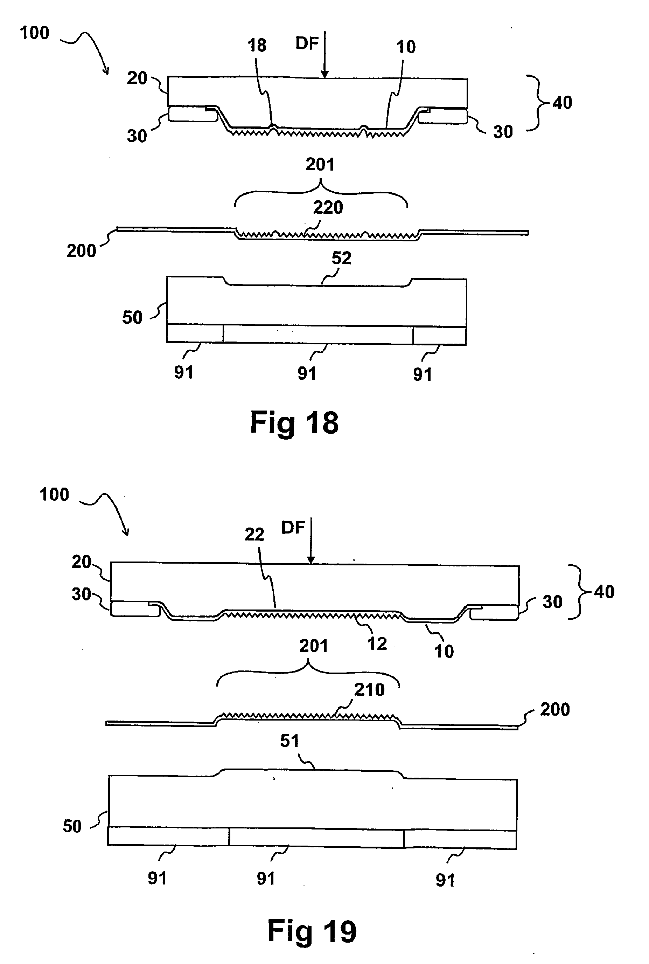

With reference to Fig. 18, a single working movement of the embossing member 10 may be used to form not only the microstructure 201 but also a macroscopic three-dimensional shape. In the embodiment of Fig. 18, the backing member has a recess 52. The embossing member 10 presses the substrate into the recess 52 of the backing member. As a result, a recess 220 is formed in the product 200, said recess having the microstructure 201 on its bottom.

The embossing force may be developed, for example, hydraulically, pneumatically, or by a combination of a wobbler and a connecting rod. In view of the workability of the surface layer of the substrate 200, it is advantageous to plasticize the surface by heating. Heaters 91 may be provided in connection with the embossing module 40 and/or the backing member 50, for plasticizing the surface of the substrate 200. Pre-heaters may be provided on the travelling path of the substrate, for heating the substrate 200 before the embossing.

With reference to Fig. 19, the backing member may also comprise a bulge 51. As a result, a bulge 210 is formed in the product 200, with the microstructure 201 on top of said bulge.

Microstructures 201 may also be formed at different height levels with respect to the unformed surface of the product 200, that is, for example both on the bottom of the recess 220 and on top of the bulge 210.

By heating, it is also possible to improve the workability of the substrate 230 when producing the macroscopic recesses 220 and/or bulges 210.

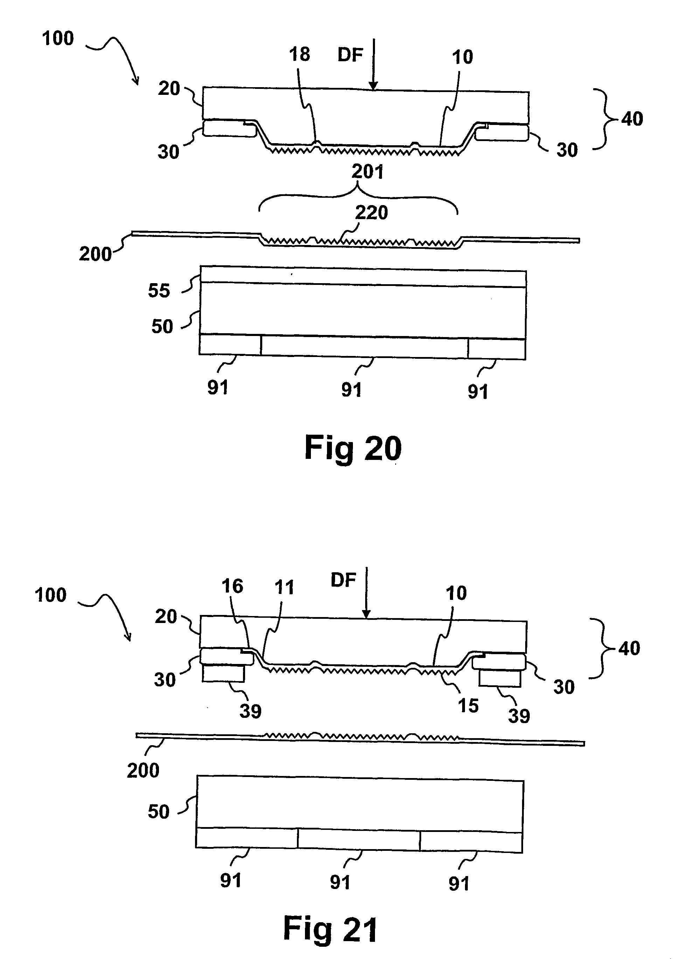

With reference to Fig. 20, the backing member may comprise a resilient surface 55 in addition to or instead of the recess 52 and/or bulge 51. The resilient surface may be, for example, of rubber.

With the embodiments of Figs. 18 to 20, it is possible to combine the visual effect given by the diffractive microstructure with an effect produced by blind stamping, i.e. embossing.

With reference to Fig. 21, the embossing module 40 may comprise separating means 39 for separating the substrate 200 from the stamping surfaces 15 of the embossing member 10 after the embossing. The separating means 39 may be, for example, suitably positioned pieces of cellular rubber. The separating means 39 may also be pneumatic nozzles or pneumatic actuators.

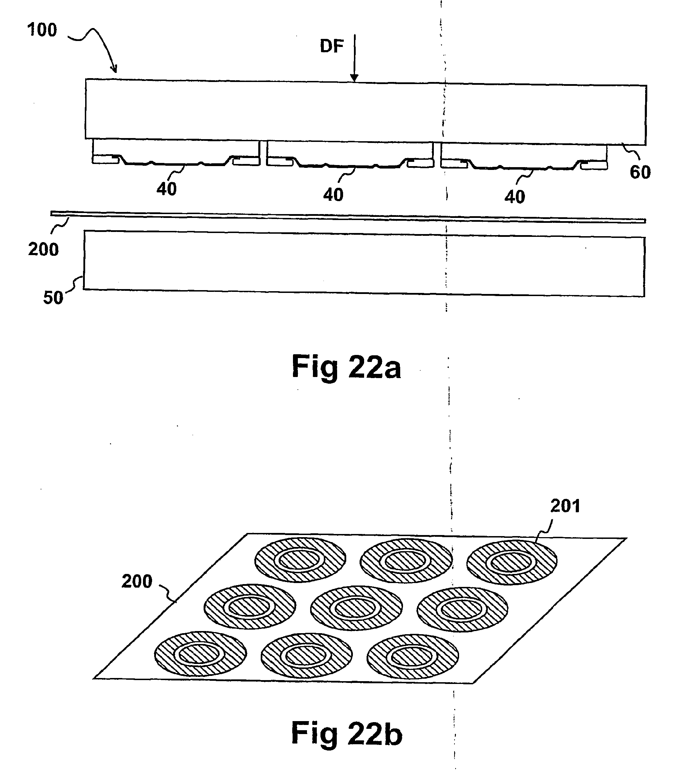

With reference to Fig. 22a, several embossing modules 40 may be installed on the same bed plate 40. The embossing modules 40 may be fixed, for example, by screws, to enable quick and secure fastening and removing of the embossing modules 40. If necessary, fastening by the screws may also enable the lateral positioning of the embossing modules 40 with respect to the bed plate 60.

The arrangement of Fig. 22a may be used to produce several similar or different microstructure areas 201 substantially simultaneously.

Between the bed plate 60 and the embossing modules 40, there may be elements for levelling out the mutual distribution of pressure of the embossing modules 40, for example plates of a resilient material, disc springs or sets of disc springs (not shown). This makes it possible that the pattern depth of the microstructure areas 201 produced by different embossing modules 40 is substantially the same or different in a desired way, in spite of possible variations in the thickness of the substrate 230.

Figure 22b shows adjacent microstructure areas 201 produced substantially simultaneously by the method of Fig. 22a.

The stamping surface or surfaces 15 of the embossing member 10 may also be doubly curved and/or curved in one direction. Those stamping surfaces 15 or portions of the stamping surface 15 which are inclined with respect to the working movement, may also be used for producing the diffractive microstructure 201.

However, the quality of the microstructure to be produced is the best possible, when the embossing member 10 does not move in the lateral direction with respect to the substrate 230 during the embossing. For this reason, it is advantageous if the stamping surface 15 is planar and the working movement is substantially perpendicular to the surface of the substrate 230.

The embossing member 10 may also comprise a second stamping surface, or more than two stamping surfaces. The stamping surfaces may be at different height levels with respect to each other; that is, the first stamping surface may protrude with respect to the second stamping surface.

The embossing member 10 may be made, for example, by cutting from a sheet made of a nickel-based material, onto which reliefs corresponding to the desired microstructure have been produced e.g. by optical and electrolytic methods. A method for manufacturing a sheet with a relief suitable for use as the embossing member 10 is described, for example, in US patent 3,950,839. The thickness of the sheet having the relief may be, for example, from 0.02 to 0.5 mm.

The manufacture of the embossing member 10 is typically an expensive and time-consuming process. The required relief is produced on the surface of the embossing member 10, for example, by optical and electrochemical methods, or by using electron beam litography and ion beam etching. In the manufacture of the embossing member 10, it is possible to utilize a prefabricated sheet with a relief, and in this case it is not necessary to perform all the steps needed for producing the relief of the member 10 from the beginning when changing the shape of the microstructure area 201. In this way, the time delay between the designing and the implementation of the shape of the microstructure area 201 is reduced, which entails a significant cost saving. Thus, particularly small production batches may be produced in a cost-effective way.

The surface of the backing member 50 may consist of a substantially unyielding material, such as steel or ceramic. The surface of the backing member 50 may also be made of a resilient material, for example rubber or epoxy resin, to compensate for variations in the thickness of the substrate 230 and/or its surface layer 240.

A recess 52 and/or bulge 51 possibly provided in the backing member 50 may be implemented, for example, by pressing the embossing member 10 or a part corresponding to the shape of the embossing member in a hardenable material. After the hardening, the formed counterpiece is used as a part of the backing member 50. The point of the backing member 50 that corresponds to the steam groove 18 of the embossing member 10 is advantageously flat, or a groove is provided at it, so that steam can flow freely in the steam discharge groove 18. Thus, the backing member 50 may also have a groove to facilitate the escaping of steam (not shown in the figures).

In an embodiment, the backing member 50 has a groove to facilitate the discharging of steam, but the embossing member 10 does not comprise a corresponding steam discharce groove 18. Such an embossing member 10 is easier to manufacture than one having the steam discharge groove 18. The steam pressure can push second grooves in the substrate 230 in locations which correspond to the grooves in the backing member so that the steam can escape along said second grooves from between the embossing member 10 and the surface layer 240 of the substrate. However, the grooves in the backing member must be wider and/or deeper than the steam discharge grooves 18 in the embossing member, in order to attain an effect which corresponds to the effect of the grooves in the embossing member.

The substrate 200 is advantageously paper or cardboard. The surface layer of the substrate 200 may consist, for example, of acrylate-based lacquer, thermoplastic polymer, such as polyvinyl chloride or polycarbonate, whose viscosity is reduced at a high temperature. Examples of such materials are listed, for example, in US patent 4,913,858. The microstructure may also be embossed in printing ink as disclosed in US patent 5,873,305.

The diffractive microstructure area 201 produced by embossing is left bare, wherein the microstructure of the areas is visible from at least one direction so that there is no transparent protective layer between the microstructure and the viewer.

The use of a paper or cardboard substrate in combination with a bare microstructure allows low production costs and an advantageous production rate. In particular, the use of cardboard also enables the stability of the substrate required for the macroscopic bulges and recesses at relatively low costs. The solution according to the invention is advantageous, for example, for use in disposable and recyclable products and product packages, because extra metal and/or protective coatings are not necessarily needed for producing the microstructures.

One or more diffractive microstructure areas 201 may be produced, for example, on a product brochure or on a product package, for example to attract the interest of a consumer or to indicate authenticity. Consequently, the product 200 may also be a product package or product brochure. The shape of the produced microstructure area 201 may be, for example, a geometrical pattern, a letter, a number, or an arbitrary pattern.

The substrate 200 may be, for example, a sheet of cardboard, on whose surface layer 240 the diffractive patterns 201 desired for the surface of the product packages are embossed. The diffractive microstructure areas 201 may represent, for example, a trademark and/or a symbol indicating the authenticity of the product. The embossed cardboard sheet may be cut into pieces and folded into product packages.

The microstructure areas 201 may also be visually almost invisible so that only persons aware of their existence may check the information related to the microstructure areas 201. This kind of an application is disclosed, for example, in US patent publication 2003/0173046. The microstructure areas may even be left inside a folded package.

Several zones with identical or different microstructures may be produced onto the surface layer 240 of the substrate 230 in order to provide a desired diffractive effect, holographic effect, movement effect, pattern depending on the direction of viewing, animation, or three-dimensional impression. The substrate 200 may also comprise patterns or symbols produced with a dye. These may be produced before the embossing, simultaneously with it, or afterwards. The patterns provided with a dye and the produced microstructures may partly overlap.

The visual effect produced by the diffractive microstructure area may also be transparent, wherein the transparency of the effect means that there is at least one direction, in which the visual effect given by the diffracted light is not detected. Thus, graphic markings produced on the substrate 200 by printing methods can be viewed in said at least one direction without a disturbance by the diffractive effect.

The diffractive microstructure consists of several periodically arranged microscopic protrusions which recur in at least one direction at the spacing of the grating constant d. The value of the grating constant d and the orientation of said protrusions may be the same or it may vary at different locations on the surface, wherein the desired diffractive visual effect or holographic pattern is obtained. The side profile of the microscopic protrusions may be, for example, sinusoidal, triangular or rectangular.

The grating constant d is advantageously between 0.4 $\mu$m and 3 $\mu$m at at least one point of the microstructure, wherein the produced microstructure 201 creates a strong visual effect at said point. The grating constant d may vary at different points of the microstructure, wherein the values of the grating constants d are advantageously between 0.4 $\mu$m and 3 $\mu$m substantially over the whole area of the microstructure.

The height of the protrusions is advantageously from 50 to 200 nm. The height of the protrusions is advantageously of the same order as the quarter of the wavelength of green light, that is, about 120 nm.

The stamping surfaces 11, 12 of the embossing member 10 comprise microscopic recessions UR which produce said protrusions PU. The recessions UR are advantageously elongated grooves, and the protrusions PU are advantageously elongated ridges. The recessions UR are placed at locations corresponding to the protrusions PU to be produced. The depth of the recessions UR is equal to or greater than the height of the protrusions to be produced.

When looking at the visual effect produced by the microstructure, the microstructure area is advantageously illuminated with white light, that is, with light that comprises wavelengths between 400 and 760 nm. In special cases, it is also possible to use, for example, monochromatic laser light.

The intensity of the light diffracted from the diffractive microstructure has a maximum at at least one illumination angle and at at least one diffraction angle which fulfil the grating equation:

$$m\lambda / d = \sin\theta_d + \sin\theta_i \quad , \qquad\qquad (1)$$

in which m is a positive or negative integer indicating the diffraction order, $\lambda$ is the wavelength of light, d is the grating constant, the illuminating angle $\theta_i$ is the angle between the direction of incidence of light and the normal of the surface of the microstructure, defined clockwise from said normal of the surface, and the diffraction angle $\theta_d$ is the angle between the diffraction direction and the normal of the surface, defined clockwise from said normal of the surface.

The visual effect produced by the microstructure is viewed from a direction defining the angle of viewing. Consequently, the visual effect produced by the diffractive microstructure will depend, for example, on the entrance angle and the angle of viewing, the grating constant d, the orientation of the microstructure, as well as the lighting conditions. The microstructure area may be illuminated, for example, by white directed light, wherein the microstructure area may flash in different colours when the viewer walks past the product set for sale or when the viewer turns the product in his/her hands.

The diffractive effect refers to an effect whose dependence from the diffraction angle can be described and/or approximated at least partly with the grating equation (1) when the diffraction order m is a positive or negative integer. The light to be diffracted may fulfil the grating equation (1) also with the diffraction order m = 0, but in this case the grating equation (1) will represent specular reflection. It is noted that specular reflection with the diffraction order m = 0 does not require the use of a diffractive microstructure.

Thanks to the doubly curved portion 11, it is possible to produce microstructures particularly on substrates 200 that are wider than the embossing member 10 in all directions.

Furthermore, the doubly curved portion 11 of the embossing member reduces the probability that the surface of the substrate 200 is cut by the embossing member 10. The cutting of the substrate 200 may cause a visual disadvantage and/or a decrease in strength.

The microstructure area 201 on the bottom of the recess 220 in the substrate 200 is protected from wear caused by planar objects.

The invention is not limited solely to the embodiments presented in the above description or in the drawings. The aim is to limit the invention only by the presentation of the scope of the appended claims.

**Claims**

1. An embossing device (**100**) for producing diffractive microstructures (**201**), the embossing device (**100**) comprising at least a backing member (**50**) and an embossing member (**10**) for exerting embossing pressure on the surface layer (**240**) of a substrate (**230**), wherein said embossing member (**10**) is made of a sheet having a microstructure, and wherein said embossing member (**10**) comprises at least one stamping surface (**15**) having a diffractive microstructure whose grating constant (**d**) is at at least one point between 0.4 and 3 micrometers, **characterized in that** said embossing member (**10**) comprises:

   - one or more fastening portions (**16**, **16a**, **16b**, **16e**, **16f**), wherein said embossing member (**10**) is attached to the embossing device (**100**) by clamping said fastening portions (**16**, **16a**, **16b**, **16e**, **16f**) between mounting faces (**27**, **37**), wherein at least one stamping surface (**15**) is located between the first (**16a**) and the second (**16b**) fastening portions, or at least one stamping surface (**15**) is located between the first part (**16e**) and the second part (**16f**) of a uniform fastening portion (**16**), and
   - at least one permanently doubly curved portion (**11**) which connects said at least one stamping surface (**15**) directly or indirectly to at least one of said fastening portions (**16**, **16a**, **16b**, **16e**, **16f**).

2. The embossing device (**100**) according to claim 1, **characterized in that** at least one fastening portion (**16d**) is located between the first and second stamping surfaces (**15**) or between the first portion (**15a**) and the second portion (**15b**) of a uniform stamping surface (**15**).

3. The embossing device (**100**) according to claim 1 or 2, **characterized in that** at least one stamping surface (**15**) is substantially surrounded by one or more fastening portions (**16**).

4. The embossing device (**100**) according to any of the preceding claims 1 to 3, **characterized in that** said one or more fastening portions (**16**) have indentations or cuts (**12**).

5. The embossing device (**100**) according to any of the preceding claims 1 to 4, **characterized in that** at least one fastening portion (**15**; **16**) is substantially planar.

6. The embossing device (**100**) according to any of the preceding claims 1 to 5, **characterized in that** said embossing member (**10**) comprises at least one steam discharge groove (**18**).

**7.** The embossing device (**100**) according to any of the preceding claims 1 to 6, **characterized in that** said backing member (**50**) comprises a bulge (**51**) and/or a recess (**52**), and/or a resilient surface (**55**) for forming a macroscopic three-dimensional shape (**220**) in said substrate (**230**).

**8.** A method for producing diffractive microstructures (**201**) by using an embossing device (**100**), the embossing device (**100**) comprising at least a backing member (**50**) and an embossing member (**10**), wherein said method comprises exerting embossing pressure on the surface layer (**240**) of a substrate (**230**) by using said backing member (**50**) and said embossing member (**10**), wherein said embossing member (**10**) is made of a sheet having a microstructure, and wherein said embossing member (**10**) comprises at least one stamping surface (**15**) with a diffractive microstructure, whose grating constant (**d**) is between 0.4 and 3 micrometers at at least one point, **characterized in that** said embossing member (**10**) comprises:

- one or more fastening portions (**16**, **16a**, **16b**, **16e**, **16f**), wherein said embossing member (**10**) is attached to the embossing device (**100**) by clamping said fastening portions (**16**, **16a**, **16b**, **16e**, **16f**) between mounting faces (**27**, **37**), wherein at least one stamping surface (**15**) is located between the first fastening portion (**16a**) and the second fastening portion (**16b**), or at least one stamping surface (**15**) is located between the first part (**16e**) and the second part (**16f**) of a uniform fastening portion (**16**), and
- at least one permanently doubly curved portion (**11**) which connects said at least one stamping surface (**15**) directly or indirectly to at least one of said fastening portions (**16**, **16a**, **16b**, **16e**, **16f**).

**9.** The method according to claim 8, **characterized in that** the method further comprises shaping at least one of said doubly curved portions (**11**) by using a bulge (**21**), wherein said bulge (**21**) also supports said embossing member (**10**) from the reverse side when said microstructures (**201**) are being produced.

**10.** The method according to claim 8 or 9, **characterized in that** the produced microstructure (**201**) is left bare.

**11.** The method according to any of the preceding claims 8 to 10, **characterized in that** said substrate (**230**) is paper or cardboard or is wider than said embossing member (**10**).

**12.** The method according to any of the preceding claims 8 to 11, **characterized in that** said microstructure (**201**) is embossed on the surface of a product package or a product brochure.

**13.** The method according to any of the preceding claims 8 to 12, **characterized in that** gas evaporated from the substrate (**230**) is discharged via a steam discharge groove (**18**) from between the embossing member (**10**) and the substrate (**230**).

**14.** The method according to any of the preceding claims 8 to 13, **characterized in that** the substrate (**230**) is also provided with a macroscopic three-dimensional shape (**210**, **220**) by using said embossing member (**10**) and a recess (**52**) and/or a bulge (**51**) and/or a resilient surface (**55**) in the backing member (**50**).

**15.** The method according to any of the preceding claims 9 to 14, **characterized in that** several separate microstructure areas (**201**) are formed substantially simultaneously on the surface layer (**240**) of the substrate (**230**) by using several members (**10**), which members (**10**) are attached to a common bed plate (**60**) by means of bases (**20**).

**Patentansprüche**

**1.** Prägevorrichtung (100) zum Erzeugen beugender Mikrostrukturen (201), wobei die Prägevorrichtung (100):

mindestens ein Trägerbauteil (50) und ein Prägebauteil (10) hat, um einen Prägedruck auf die Oberflächenschicht (240) eines Substrates (230) auszuüben, wobei das Prägebauteil (10) aus einem Blech gefertigt ist, das eine Mikrostruktur hat, und wobei das Prägebauteil (10) mindestens eine Prägeoberfläche (15) hat, die eine beugende Mikrostruktur hat, deren Gitterkonstante (d) an mindestens einem Punkt zwischen 0,4 und 3 Mikrometern beträgt,
**dadurch gekennzeichnet, dass** das Prägebauteil (10):

einen oder mehrere Befestigungsabschnitte (16, 16a, 16b, 16e, 16f) hat, wobei das Prägebauteil (10) durch Klemmen der Befestigungsabschnitte (16, 16a, 16b, 16e, 16f) zwischen Montageflächen (27, 37) an der Prägevorrichtung (100) angebracht ist, wobei mindestens eine Prägeoberfläche (15) zwischen dem ersten (16a) und dem zweiten (16b) Befestigungsabschnitt gelegen ist, oder mindestens eine Prägeoberfläche (15) zwischen dem ersten Teil (16e) und dem zweiten Teil (16f) eines einheitlichen Befestigungsabschnitts (16) gelegen ist, und

mindestens einen dauerhaft doppelt gekrümmten Abschnitt (11) hat, der die mindestens eine Prägeoberfläche (15) direkt oder indirekt mit mindestens einem der Befestigungsabschnitte (16, 16a, 16b, 16e, 16f) verbindet.

2. Prägevorrichtung (100) nach Anspruch 1, **dadurch gekennzeichnet, dass**
mindestens ein Befestigungsabschnitt (16d) zwischen der ersten und der zweiten Prägeoberfläche (15) oder zwischen dem ersten Abschnitt (15a) und dem zweiten Abschnitt (15b) einer einheitlichen Prägeoberfläche (15) gelegen ist.

3. Prägevorrichtung (100) nach Anspruch 1 oder 2, **dadurch gekennzeichnet, dass**
mindestens eine Prägeoberfläche (15) durch einen oder mehrere Befestigungsabschnitte (16) im Wesentlichen umschlossen ist.

4. Prägevorrichtung (100) nach einem der vorstehenden Ansprüche 1 bis 3, **dadurch gekennzeichnet, dass**
der eine oder mehrere Befestigungsabschnitte (16) Aussparungen oder Schnitte (12) haben.

5. Prägevorrichtung (100) nach einem der vorstehenden Ansprüche 1 bis 4, **dadurch gekennzeichnet, dass**
mindestens ein Befestigungsabschnitt (15, 16) im Wesentlichen eben ist.

6. Prägevorrichtung (100) nach einem der vorstehenden Ansprüche 1 bis 5, **dadurch gekennzeichnet, dass**
das Prägebauteil (10) mindestens eine Dampf abführende Nut (18) hat.

7. Prägevorrichtung (100) nach einem der vorstehenden Ansprüche 1 bis 6, **dadurch gekennzeichnet, dass**
das Trägerbauteil (50) eine Aufwölbung (51) und/oder eine Aussparung (52) und/oder eine federnde Oberfläche (55) zum Ausbilden einer makroskopisch dreidimensionalen Form (220) in dem Substrat (230) hat.

8. Verfahren zum Erzeugen beugender Mikrostrukturen (201) mittels einer Prägevorrichtung (100), wobei die Prägevorrichtung (100) mindestens ein Trägerbauteil (50) und ein Prägebauteil (10) hat, wobei das Verfahren folgende Schritte aufweist
Ausüben eines Prägedrucks auf die Oberflächenschicht (240) eines Substrates (230) mittels des Trägerbauteils (50) und des Prägebauteils (10), wobei das Prägebauteil (10) aus einem Blech gefertigt ist, das eine Mikrostruktur hat, und wobei das Prägebauteil (10) mindestens eine Prägeoberfläche (15) mit einer beugenden Mikrostruktur hat, deren Gitterkonstante (d) an mindestens einem Punkt zwischen 0,4 und 3 Mikrometern beträgt,
**dadurch gekennzeichnet, dass**
das Prägebauteil (10):

einen oder mehrere Befestigungsabschnitte (16, 16a, 16b, 16e, 16f) hat, wobei das Prägebauteil (10) durch Klemmen der Befestigungsabschnitte (16, 16a, 16b, 16e, 16f) zwischen Montageflächen (27, 37) an der Prägevorrichtung (100) angebracht ist, wobei mindestens eine Prägeoberfläche (15) zwischen dem ersten Befestigungsabschnitt (16a) und dem zweiten Befestigungsabschnitt (16b) gelegen ist, oder mindestens eine Prägeoberfläche (15) zwischen dem ersten Teil (16e) und dem zweiten Teil (16f) eines einheitlichen Befestigungsabschnitts (16) gelegen ist, und

mindestens einen dauerhaft doppelt gekrümmten Abschnitt (11) hat, der die mindestens eine Prägeoberfläche (15) direkt oder indirekt mit mindestens einem der Befestigungsabschnitte (16, 16a, 16b, 16e, 16f) verbindet.

9. Verfahren nach Anspruch 8, **dadurch gekennzeichnet, dass**
das Verfahren ferner: das Formen von mindestens von einem der doppelt gekrümmten Abschnitte (11) mittels einer Aufwölbung (21) umfasst, wobei die Aufwölbung (21) auch das Prägebauteil (10) von der Rückseite stützt, wenn die Mikrostrukturen (201) erzeugt werden.

10. Verfahren nach Anspruch 8 oder 9, **dadurch gekennzeichnet, dass**
die erzeugte Mikrostruktur (201) blank belassen ist.

11. Verfahren nach einem der vorstehenden Ansprüche 8 bis 10, **dadurch gekennzeichnet, dass**

das Substrat (230) Papier oder Pappe ist oder breiter als das Prägebauteil (10) ist.

**12.** Verfahren nach einem der vorstehenden Ansprüche 8 bis 11, **dadurch gekennzeichnet, dass** die Mikrostruktur (201) in die Oberfläche einer Erzeugnisverpackung oder einer Erzeugnisbroschüre geprägt ist.

**13.** Verfahren nach einem der vorstehenden Ansprüche 8 bis 12, **dadurch gekennzeichnet, dass** ein Gas, das aus dem Substrat (230) verdampft, durch eine Dampf abführende Nut (18) von zwischen dem Prägebauteil (10) und dem Substrat (230) abgeführt wird.

**14.** Verfahren nach einem der vorstehenden Ansprüche 8 bis 13, **dadurch gekennzeichnet, dass** das Substrat (230) zudem mit einer makroskopisch dreidimensionalen Form (210, 220) mittels des Prägebauteils (10) und einer Aussparung (52) und/oder einer Aufwölbung (51) und/oder einer federnden Oberfläche (55) in dem Trägerbauteil (50) versehen ist.

**15.** Verfahren nach einem der vorstehenden Ansprüche 9 bis 14, **dadurch gekennzeichnet, dass** mehrere getrennte Mikrostrukturbereiche (201) auf der Oberflächenschicht (240) des Substrats (230) mittels mehrerer Bauteile (10) im Wesentlichen gleichzeitig ausgebildet werden, wobei diese Bauteile (10) an einer gemeinsamen Auflageplatte (60) durch Basen (20) angebracht sind.

## Revendications

**1.** Dispositif de gaufrage (100) pour produire des microstructures à diffraction (201), le dispositif de gaufrage (100) comprenant au moins un élément de support (50) et un élément de gaufrage (10) pour exercer une pression de gaufrage sur la couche de surface (240) d'un substrat (230), dans lequel ledit élément de gaufrage (10) est réalisé en une feuille ayant une microstructure, et dans lequel ledit élément de gaufrage (10) comprend au moins une surface d'estampage (15) ayant une microstructure à diffraction dont la constante de réseau (d) est en au moins un point entre 0,4 et 3 micromètres, **caractérisé en ce que** ledit élément de gaufrage (10) comprend :

- une ou plusieurs partie(s) de fixation (16, 16a, 16b, 16e, 16f), où ledit élément de gaufrage (10) est attaché au dispositif de gaufrage (100) par serrage desdites parties de fixation (16, 16a, 16b, 16e, 16f) entre des faces de montage (27, 37), où au moins une surface d'estampage (15) est située entre les première (16a) et deuxième (16b) parties de fixation, ou au moins une surface d'estampage (15) est située entre la première partie (16e) et la deuxième partie (16f) d'une partie de fixation uniforme (16), et

- au moins une partie doublement incurvée de manière permanente (11) qui relie ladite au moins une surface d'estampage (15) directement ou indirectement à au moins l'une desdites parties de fixation (16, 16a, 16b, 16e, 16f).

**2.** Dispositif de gaufrage (100) selon la revendication 1, **caractérisé en ce qu'**au moins une partie de fixation (16d) est située entre les première et deuxième surfaces de poinçon (15) ou entre la première partie (15a) et la deuxième partie (15b) d'une surface d'estampage uniforme (15).

**3.** Dispositif de gaufrage (100) selon la revendication 1 ou 2, **caractérisé en ce qu'**au moins une surface d'estampage (15) est substantiellement entourée par une ou plusieurs partie(s) de fixation (16).

**4.** Dispositif de gaufrage (100) selon l'une des revendications précédentes 1 à 3, **caractérisé en ce que** ladite ou lesdites une ou plusieurs partie(s) de fixation (16) a/ont des indentations ou des découpes (12).

**5.** Dispositif de gaufrage (100) selon l'une des revendications précédentes 1 à 4, **caractérisé en ce qu'**au moins une partie de fixation (15 ; 16) est substantiellement plane.

**6.** Dispositif de gaufrage (100) selon l'une quelconque des revendications précédentes 1 à 5, **caractérisé en ce que** ledit élément de gaufrage (10) comprend au moins une rainure d'évacuation de vapeur (18).

**7.** Dispositif de gaufrage (100) selon l'une des revendications précédentes 1 à 6, **caractérisé en ce que** ledit élément de support (50) comprend un renflement (51) et/ou un évidement (52), et/ou une surface élastique (55) pour former une forme tridimensionnelle macroscopique (220) dans ledit substrat (230).

**8.** Procédé pour produire des microstructures à diffraction (201) en utilisant un dispositif de gaufrage (100), le dispositif de gaufrage (100) comprenant au moins un élément de support (50) et un élément de gaufrage (10), dans lequel ledit procédé comprend le fait d'exercer une pression de gaufrage sur la couche de surface (240) d'un substrat (230) en utilisant ledit élément de support (50) et ledit élément de gaufrage (10), dans lequel ledit élément de gaufrage (10) est réalisé en une feuille ayant une microstructure, et dans lequel ledit élément de gaufrage (10) comprend au moins une surface d'estampage (15) avec une microstructure à diffraction, dont la constante de réseau (d) est comprise entre 0,4 et 3 micromètres en au moins un point, **caractérisé en ce que** ledit élément de gaufrage (10) comprend :

   - une ou plusieurs partie(s) de fixation (16, 16a, 16b, 16e, 16f), où ledit élément de gaufrage (10) est attaché au dispositif de gaufrage (100) par serrage desdites parties de fixation (16, 16a, 16b, 16e, 16f) entre des faces de montage (27, 37), où au moins une surface d'estampage (15) est située entre la première partie de fixation (16a) et la deuxième partie de fixation (16b), ou au moins une surface d'estampage (15) est située entre la première partie (16e) et la deuxième partie (16f) d'une partie de fixation uniforme (16), et
   - au moins une partie doublement incurvée de manière permanente (11) qui relie ladite au moins une surface d'estampage (15) directement ou indirectement à au moins l'une desdites parties de fixation (16, 16a, 16b, 16e, 16f).

**9.** Procédé selon la revendication 8, **caractérisé en ce que** le procédé comprend en outre le fait de mettre en forme au moins l'une desdites parties doublement incurvées (11) en utilisant un renflement (21), dans lequel ledit renflement (21) supporte également ledit élément de gaufrage (10) à partir du côté inverse lorsque lesdites microstructures (201) sont produites.

**10.** Procédé selon la revendication 8 ou 9, **caractérisé en ce que** la microstructure produite (201) est laissée nue.

**11.** Procédé selon l'une des revendications précédentes 8 à 10, **caractérisé en ce que** ledit substrat (230) est du papier ou du carton ou est plus large que ledit élément de gaufrage (10).

**12.** Procédé selon l'une des revendications précédentes 8 à 11, **caractérisé en ce que** ladite microstructure (201) est gaufrée sur la surface d'un emballage de produit ou d'une brochure de produit.

**13.** Procédé selon l'une des revendications précédentes 8 à 12, **caractérisé en ce que** le gaz évaporé à partir du substrat (230) est évacué par l'intermédiaire d'une rainure d'évacuation de vapeur (18) depuis l'espace entre l'élément de gaufrage (10) et le substrat (230).

**14.** Procédé selon l'une des revendications précédentes 8 à 13, **caractérisé en ce que** le substrat (230) est également pourvu d'une forme tridimensionnelle macroscopique (210, 220) en utilisant ledit élément de gaufrage (10) et un évidement (52) et/ou un renflement (51) et/ou une surface élastique (55) dans l'élément de support (50).

**15.** Procédé selon l'une des revendications précédentes 9 à 14, **caractérisé en ce que** plusieurs zones de microstructure séparées (201) sont formées substantiellement simultanément sur la couche de surface (240) du substrat (230) en utilisant plusieurs éléments (10), lesquels éléments (10) sont attachés à une plaque d'appui commune (60) au moyen de bases (20).

**Fig 1**

**Fig 2a**

**Fig 2b**

**Fig 3**

**Fig 4**

**Fig 5**

SY

SX

PDC

RY

RX

PLIN

**Fig 6**

10

15

13

11

16

**Fig 7**

**Fig 8a**

**Fig 8b**

**Fig 8c**

**Fig 8d**

**Fig 8e**

10

17    18    15    15

16e    11

16f

16

**Fig 9a**

40    30    16  11  17  15  18  15  37    d1  d2

20    19    10    21    27    VD

**Fig 9b**

**Fig 10a**

**Fig 10b**

**Fig 10c**

**Fig 11**

**Fig 12a**

**Fig 12b**

**Fig 13a**

**Fig 13b**

**Fig 14**

**Fig 15a**

**Fig 15b**

**Fig 16**

**Fig 17**

**Fig 18**

**Fig 19**

**Fig 20**

**Fig 21**

100

DF

60

40          40          40

200

50

# Fig 22a

201

200

# Fig 22b

**EP 2 026 979 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4913858 A
- US 6651338 B
- WO 2006037851 A
- US 3950839 A
- US 5873305 A
- US 20030173046 A